# EUROPÄISCHE PATENTANMELDUNG

(11) **EP 1 286 107 A2**
(43) Veröffentlichungstag der Anmeldung: **26.02.2003**
(21) Anmeldenummer: 02016043.8
(22) Anmeldetag: 19.07.2002
(51) Int. Cl.: F21V 15/06

(54) **Fahrzeugleuchte**

(30) Priorität: 09.08.2001 DE 10139252
(71) Anmelder: Hella KG Hueck & Co., 59552 Lippstadt (DE)
(72) Erfinder: Sachs-Dücker, Gabriele Monika, 59597 Erwitte (DE); Neumann, Cornelius, 33649 Bielefeld (DE)

(57) **Zusammenfassung**

Fahrzeugleuchte mit einem Gehäuse, einem zwischen einer Gehäuserückwand (1) und einem optischen System (2) angeordneten elektronischen Träger (3), auf dem mindestens ein wärmeerzeugendes lichtemittierendes Bauteil elektrisch verschaltet ist, das zu dem optischen System (2) in einem festen Bezug steht, wobei die Gehäuserückwand (1) mindestens eine als Feder wirkende tonnenförmige Wölbung (4,4') aufweist, die kraftschlüssig auf dem Träger (3) aufliegt, so dass die Wölbung (4,4') mit dem Träger (3) in thermischem Kontakt steht und die Gehäuserückwand (1) bezüglich des Trägers beweglich ist.

## Beschreibung

Die Erfindung betrifft eine Fahrzeugleuchte mit einem Gehäuse, einem zwischen einer Gehäuserückwand und einem optischen System angeordneten elektronischen Träger, auf dem mindestens ein wärmeerzeugendes lichtemittierendes Bauteil elektrisch verschaltet ist, das zu dem optischen System in einem festen Bezug steht.

In der modernen Beleuchtungstechnik für Fahrzeuge finden zunehmend Leuchten mit Leuchtdioden (LED's) Verwendung. Dabei befinden sich auf einem elektronischen Träger, z.B. einer Leiterplatte oder einem Frame lichtemittierende Bauteile, die in einem festen Bezug zu einer tragenden optischen Struktur, z.B. einer Lichtscheibe, stehen. Der feste Bezug zwischen einer Lichtquelle, z.B. einer LED und der optischen Struktur gewährleistet dabei eine gleichbleibende vorgegebene Beleuchtungscharakteristik und ermöglicht eine besonders kompakte Bauweise.

Problematisch ist dabei die Wärmeableitung der Abwärme, die im Betrieb von der Lichtquelle erzeugt wird. Die Abwärme wird im Wesentlichen von dem Träger aufgenommen und muss über das Gehäuse abgeführt werden. Dazu ist es am günstigsten, wenn die Gehäuserückwand mit dem Träger verbunden wird.

Bei bekannten Fahrzeugleuchten wird der Träger durch eine Befestigung mittels Rastung, Warmverbügelung oder Umspritzen an der Gehäuserückwand fixiert. Dadurch erhält die auf dem Träger angeordnete Lichtquelle einen festen Bezug zu dem Gehäuse. Dies ist jedoch besonders nachteilig, wenn gleichzeitig die Lichtquelle in Bezug auf das optische System justiert ist oder gar mit ihm fest miteinander verbunden sein muss. Da die unterschiedlichen Wärmeausdehnungen von Gehäuse, optischem System und Träger zu thermischen Spannungen zwischen den Bauteilen führen, kann die Justierung verloren gehen oder, insbesondere bei einer festen Verbindung, Risse in der Struktur auftreten. Eine feste Verbindung zwischen Träger und Gehäuserückwand ist deshalb bei solchen Fahrzeugleuchten problematisch. Andererseits ist eine effektive Wärmeableitung über die Gehäuserückwand notwendig.

Aufgabe der vorliegenden Erfindung ist es daher, die bekannten Fahrzeugleuchten mit einem festen Bezug zwischen einer auf einem Träger angeordneten Lichtquelle und einer optischen Struktur so zu verbessern, dass der Träger die anfallende Abwärme über die Gehäuserückwand effektiv ableitet und thermische Spannungen in der Fahrzeugleuchte ausgeglichen werden.

Diese Aufgabe wird erfindungsgemäß in Verbindung mit dem Oberbegriff des Anspruches 1 dadurch gelöst, dass die Gehäuserückwand mindestens eine als Feder wirkende tonnenförmige Wölbung aufweist, die kraftschlüssig auf dem Träger aufliegt, so dass die Wölbung mit dem Träger in thermischem Kontakt steht und die Gehäuserückwand bezüglich des Trägers beweglich ist.

Dadurch, dass die Gehäuserückwand tonnenförmige Wölbungen aufweist, die über Federkräfte eine kraftschlüssige Verbindung mit dem Träger herstellen, ist ein guter thermischer Kontakt gewährleistet, der die Abwärme über die Gehäuserückwand nach außen abführt. Gleichzeitig werden thermische Spannungen zwischen den verbundenen Bauteilen ausgeglichen, da die Gehäuserückwand in Bezug auf den Träger beweglich bleibt.

Gemäß einer bevorzugten Ausführungsform der Erfindung sind zwischen den Wölbungen der Gehäuserückwand nach innen zeigende, dem Träger zugewandte Stege angeordnet.

Dadurch, dass zwischen den Wölbungen Stege angeordnet sind, erhält die Gehäuserückwand eine besonders stabile Form. Die nach innen zeigenden Stege ermöglichen eine besonders platzsparende Bauform der Rückwand.

Nach einer weiteren bevorzugten Ausführungsform der Erfindung weist der Träger Aussparungen auf, in die die nach innen zeigenden Stege eingreifen.

Dadurch kann der Träger, insbesondere Leiterplatten optimal an den Wölbungen anliegen, so dass ein besonders guter thermischer Kontakt zu der Gehäuserückwand besteht.

Gemäß einer weiteren bevorzugten Ausführungsform der Erfindung sind zwischen den Wölbungen der Gehäuserückwand nach außen zeigende, dem Träger abgewandte Stege angeordnet.

Nach außen zeigende Stege in der Rückwand vereinfachen die Anordnung, insbesondere großflächiger Leiterplatten mit einer Vielzahl von elektronischen Bauelementen bei gleichzeitiger guter thermischen Kontaktierung mit der Gehäuserückwand.

Nach einer weiteren bevorzugten Ausführungsform der Erfindung sind die Wölbungen durch, die Stege verbindende gebogene Verstrebungen ausgebildet, die formschlüssig auf einer Folie aufgebracht sind.

Die notwendige Federkraft, um das Gehäuse mit dem Träger thermisch zu kontaktieren, wird durch die entsprechend gebogenen Verstrebungen zwischen den Stegen aufgebracht. Die Wölbungen selbst werden durch eine Bespannung mit einer dünnen Folie realisiert. Dadurch wird eine Gewichtsersparnis des Gehäuses erzielt und gleichzeitig eine besonders gute Wärmeleitung erreicht.

Gemäß einer weiteren bevorzugten Ausführungsform der Erfindung sind die Wölbungen aus einem Gehäusematerial ausgebildet.

Dadurch, dass die Wölbungen aus einem Gehäusematerial ausgebildet sind, ist eine besonders kostensparende Herstellung des Gehäuses realisierbar. Durch den gleichen Wärmeausdehnungskoeffizient von Rückwand und dem übrigen Gehäuse, werden zudem thermische Spannungen zwischen diesen Bauteilen weitestgehend vermieden.

Nach einer weiteren bevorzugten Ausführungsform der Erfindung sind die Wölbungen aus einem Metall ausgebildet.

Dadurch, dass die Wölbungen aus einem Metall ausgebildet sind, ist eine besonders hohe Wärmeableitung möglich, da Metalle im Allgemeinen im Vergleich zu anderen Materialien einen hohen Wärmeleitungskoeffizienten aufweisen. Gleichzeitig lässt sich dadurch auf einfache Weise eine elektrische Kontaktierung zwischen Träger und Rückwand realisieren.

Gemäß einer weiteren bevorzugten Ausführungsform der Erfindung sind die Wölbungen in einer Verbundbauweise bestehend aus mindestens zwei Schichten ausgebildet.

Durch eine Verbundbauweise aus mehreren Schichten kann der Gehäuserückwand eine hohe Stabilität und Federkraft verliehen werden. Gleichzeitig ist dabei eine gewichtssparende Konstruktion möglich.

Nach einer weiteren bevorzugten Ausführungsform der Erfindung weisen die Wölbungen einen elektrischen Kontakt zu dem elektronischen Träger auf.

Durch einen elektrischen Kontakt zwischen dem elektronischen Träger und der Gehäuserückwand, kann die Rückwand für die elektronische Verschaltung, z.B. als Massekontakt, mit benutzt werden, was sich kostengünstig auf die Herstellung der Fahrzeugleuchte auswirkt.

Gemäß einer weiteren bevorzugten Ausführungsform der Erfindung weisen die Wölbungen auf der dem Träger zugewandten Seite eine elektrische Isolierschicht auf.

Durch eine elektrische Isolierung auf der Innenwand der Gehäuserückseite, wird eine elektrische Kontaktierung zwischen elektronischem Träger und Gehäuserückwand vermieden.

Dies ist insbesondere dann von Vorteil, wenn die Gehäuserückwand aus einem elektrisch leitfähigem Material besteht, andererseits aber keine elektrische Kontaktierung zwischen Träger und Gehäuserückwand erwünscht ist, z.B. wenn die Gefahr eines elektrischen Kurzschlusses besteht.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Zeichnungen zeigen:
- Figur 1:: Eine schematische Darstellung einer Gehäuserückwand einer Fahrzeugleuchte mit einem elektronischen Träger und einem optischen System von der Seite im Schnitt,
- Figur 2:: eine perspektivische Draufsicht der Gehäuserückwand,
- Figur 3: eine zweite Ausführungsform der Gehäuserückwand,
- Figur 4: eine dritte Ausführungsform der Gehäuserückwand und
- Figur 5: eine perspektivische Draufsicht der Gehäuserückwand von Fig. 4.

Eine Fahrzeugleuchte weist ein Gehäuse mit einer Gehäuserückwand 1, ein optisches System 2 und einen elektronischen Träger 3 auf.

Der Träger 3, beispielsweise eine Leiterplatte ist zwischen der Gehäuserückwand 1 und dem optischen System 2, beispielsweise einer Lichtscheibe, angeordnet. Auf dem Träger 3 befindet sich ein (nicht dargestelltes) lichtemittierendes Element. Der Träger 3, und damit auch das lichtemittierendes Element, ist mit dem optischen System 2 fest verbunden, bzw. steht zumindest mit diesem in einem festen Bezug, beispielsweise durch eine vorgegebene feste Justierung dieser Bauteile zueinander.

Die Gehäuserückwand 1 weist Wölbungen 4, 4' und Stege 5, 5', 5" auf. Die Stege 5, 5', 5" dienen als Stabilisatoren für die Gehäuserückwand 1. Zwischen zwei stabilisierenden Stegen 5, 5', 5" befindet sich jeweils eine Wölbung 4, 4'.

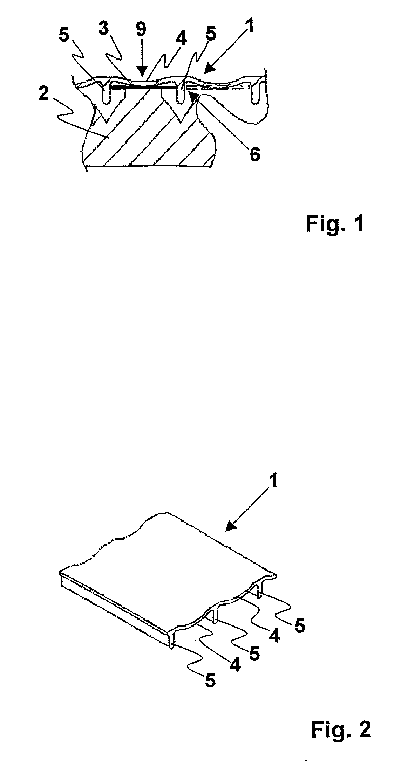

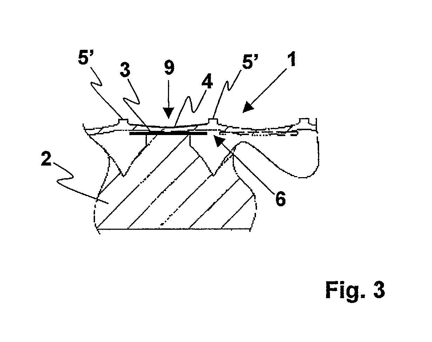

In der bevorzugten Ausführungsform in Fig. 1 weist der Träger 3 Aussparungen 6 auf, in die die Stege 5 eingreifen, damit die Wölbungen 4 an dem Träger 3 anliegen. Dagegen sind in der bevorzugten Ausführungsform in Fig. 3 die Stege 5' nach außen hin orientiert.

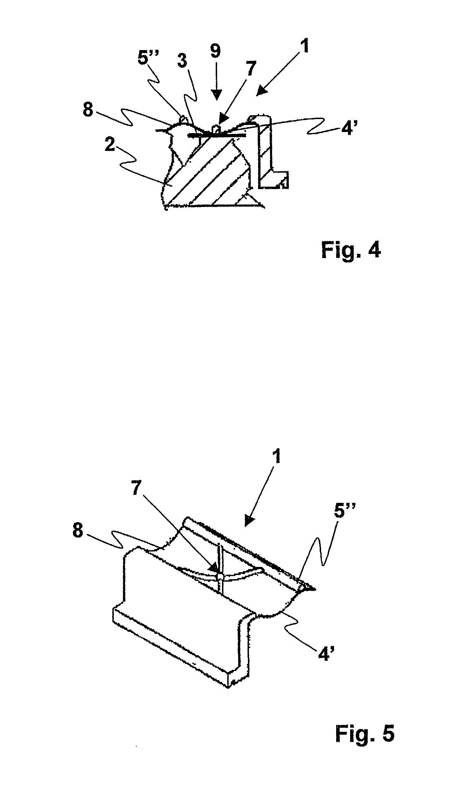

Das Wandmaterial und die Wandstärke der in den Fig. 1 + 3 dargestellten Wölbungen 4 ist so gewählt, dass die daraus gebildeten Wölbungen 4 selbst eine bestimmte Elastizität aufweisen und sich dadurch eine Federwirkung aufbaut. In der in Fig.4 dargestellten Ausführungsform sind hingegen die Stege 5" mit Verstrebungen 7 verbunden, die auf eine dünne Folie 8 aufgebracht sind. Hier weisen die Verstrebungen 7 elastische Eigenschaften auf und sind derart gebogen, dass sich zwischen den Stegen 5" die Wölbungen 4' als Feder herausbilden.

Die Gehäuserückwand 1 ist mit dem Gehäuse durch geeignete Verbindungsmittel, beispielsweise einer Rastung, verbunden. Grundsätzlich kann das Gehäuse mit der Gehäuserückwand 1 auch einstückig ausgeführt sein. Der Träger 3 ist zusammen mit dem optischen System mit dem Gehäuse verbunden und so darin eingepasst, dass im "kalten" Zustand die Gehäuserückwand 1 mit einer vorgegebenen mechanischen Spannung an dem Träger anliegt. Die tonnenförmigen Wölbungen 4, 4' wirken dabei als Feder, mit einer in Richtung 9 wirkenden Federkraft, so dass eine kraftschlüssige Verbindung zwischen den Wölbungen 4, 4' und dem Träger 3 aufgebaut wird. Der Träger 3 stützt sich dabei an dem optischen System 2 ab, so dass ein Durchbiegen verhindert wird. Grundsätzlich kann die Abstützung auch durch entsprechend angeordnete abstützende Elemente erfolgen.

Im Leuchtenbetrieb erwärmen sich die einzelnen Komponenten des Gehäuses unterschiedlich stark und dehnen sich aufgrund dieser Erwärmungen und ihrer unterschiedlichen Wärmeausdehnungskoeffizienten unterschiedlich stark aus. Insbesondere nimmt der Träger 3 die durch die Leuchtenfunktion des lichtemittierenden Elements erzeugte Abwärme auf. Die kraftschlüssige Verbindung zu der Gehäuserückwand 1 wirkt nun als thermischer Kontakt, der die Abwärme über Wärmeleitung durch die Gehäuserückwand 1 nach außen abführt. Durch die Erwärmung der Gehäuserückwand 1 dehnt sich die durch die Wölbungen 4, 4' gebildete Feder aus, so dass sich die Federkraft erhöht. Die erhöhte Federkraft wird durch das Gehäuse aufgenommen. Da die Gehäuserückwand 1 zu dem Träger 3 Relativbewegungen ausführen kann, werden thermische Spannungen zwischen diesen Bauteilen vermieden. Durch die kraftschlüssige Verbindung bleibt dabei unabhängig vom Grad der Erwärmung der thermische Kontakt zwischen Gehäuserückwand 1 und Träger 3 erhalten.

## Patentansprüche

1. Fahrzeugleuchte mit einem Gehäuse, einem zwischen einer Gehäuserückwand und einem optischen System angeordneten elektronischen Träger, auf dem mindestens ein wärmeerzeugendes lichtemittierendes Bauteil elektrisch verschaltet ist, das zu dem optischen System in einem festen Bezug steht, **dadurch gekennzeichnet, dass** die Gehäuserückwand (1) mindestens eine als Feder wirkende tonnenförmige Wölbung (4, 4') aufweist, die kraftschlüssig auf dem Träger (3) aufliegt, so dass die Wölbung (4, 4') mit dem Träger (3) in thermischem Kontakt steht und die Gehäuserückwand (1) bezüglich des Trägers (3) beweglich ist.

2. Fahrzeugleuchte nach Anspruch 1, **dadurch gekennzeichnet, dass** zwischen den Wölbungen (4) der Gehäuserückwand (1) nach innen zeigende, dem Träger (3) zugewandte Stege (5) angeordnet sind.

3. Fahrzeugleuchte nach Anspruch 1 und 2, **dadurch gekennzeichnet, dass** der Träger (3) Aussparungen (6) aufweist, in die die nach innen zeigenden Stege (5) eingreifen.

4. Fahrzeugleuchte nach einem der Ansprüche 1 bis 3, **dadurch gekennzeichnet, dass** zwischen den Wölbungen (4, 4') der Gehäuserückwand (1) nach außen zeigende, dem Träger (3) abgewandte Stege (5', 5") angeordnet sind.

5. Fahrzeugleuchte nach einem der Ansprüche 1 bis 4, **dadurch gekennzeichnet, dass** die Wölbungen (4') durch, die Stege (5") verbindende gebogene Verstrebungen (7) ausgebildet sind, die formschlüssig auf einer Folie (8) aufgebracht sind.

6. Fahrzeugleuchte nach einem der Ansprüche 1 bis 5, **dadurch gekennzeichnet, dass** die Wölbungen (4, 4') aus einem Gehäusematerial ausgebildet sind.

7. Fahrzeugleuchte nach einem der Ansprüche 1 bis 6, **dadurch gekennzeichnet, dass** die Wölbungen (4, 4') aus einem Metall ausgebildet sind.

8. Fahrzeugleuchte nach einem der Ansprüche 1 bis 7, **dadurch gekennzeichnet, dass** die Wölbungen (4) in einer Verbundbauweise bestehend aus mindestens zwei Schichten ausgebildet sind.

9. Fahrzeugleuchte nach einem der Ansprüche 1 bis 8, **dadurch gekennzeichnet, dass** die Wölbungen (4, 4') einen elektrischen Kontakt zu dem Träger (3) aufweisen.

10. Fahrzeugleuchte nach einem der Ansprüche 1 bis 8, **dadurch gekennzeichnet, dass** die Wölbungen (4, 4') auf der dem Träger (3) zugewandten Seite eine elektrische Isolierschicht aufweisen.
